# EUROPÄISCHE PATENTSCHRIFT

(11) **EP 2 025 488 B1**
(45) Veröffentlichungstag und Bekanntmachung des Hinweises auf die Patenterteilung: **16.03.2011**
(21) Anmeldenummer: 08153696.3
(22) Anmeldetag: 31.03.2008
(51) Int. Cl.: B29C 33/38

(54) **Gussform und Verfahren zur Herstellung einer Gussform**
Mould and method for manufacturing a mould
Moule en fonte et procédé destiné à la fabrication d'un moule en fonte

(30) Priorität: 09.08.2007 DE 102007037701
(43) Veröffentlichungstag der Anmeldung: 18.02.2009
(73) Patentinhaber: Max Bögl Fertigteilwerke GmbH & Co. KG, 92369 Sengenthal (DE)
(72) Erfinder: Bögl, Stefan, 92318 Neumarkt (DE); Schmid, Andreas, 92334 Berching (DE)
(74) Vertreter: Bergmeier, Werner

(56) Entgegenhaltungen:
- EP-A- 0 273 181
- EP-A- 0 451 042
- EP-A- 0 979 717
- EP-A1- 1 295 692
- CA-A1- 2 187 123
- FR-A- 2 301 356
- GB-A- 2 250 703
- JP-A- 4 019 111
- JP-A- 62 104 712
- JP-A- 2002 346 663
- JP-A- 2003 170 410
- US-A- 4 915 740
- US-A- 5 188 791
- DATABASE WPI Week 198801 Thomson Scientific, London, GB; AN 1988-003405 XP002502619 -& JP 62 267109 A (DENKI KAGAKU KOGYO KK) 19. November 1987 (1987-11-19)

## Beschreibung

Die vorliegende Erfindung betrifft eine Gussform mit mehreren Formteilen zum Herstellen von Gussteilen in einer Gießmaschine, wobei die Formteile während des Gießvorganges zusammenwirken, sowie ein Verfahren zur Herstellung einer entsprechenden Gussform.

Aus der DE 43 05 196 A1 ist ein Verfahren zur Herstellung einer Spritzgussform bekannt, bei welchem ein Werkzeug zur Herstellung eines Spritzgussteiles in einer Negativform hergestellt wird. Mit dem so hergestellten Werkzeug wird anschließend ein Kunststoffteil als Gussteil hergestellt. Die Negativform besteht aus Mineralguss oder Zement und dient als einfache Abgussform zur Herstellung des eigentlichen Werkzeuges, welches anschließend noch fein bearbeitet werden kann. Nachteilig bei dieser Herstellung ist es, dass die Negativform keine großen Belastungen aufnehmen kann und darüber hinaus auch nur sehr grobe Abgüsse erlaubt. Auch die damit hergestellte Spritzgussform ist nur für kleinere und mittlere Fertigungsstückzahlen einsetzbar, und dient hauptsächlich der Prototypenherstellung.

Aus der EP-A-273 181 ist ein Gussform aus einem Hochleistungsbeton und ein Verfahren zur Herstellung eines Formteiles aus einem Hochleistungsbeton bekannt.

Aufgabe der vorliegenden Erfindung ist es eine Gussform zu schaffen, welche sehr widerstandsfähig ist und auch bei hohen Drücken und Temperaturen formbeständig bleibt, wodurch präzise Gussteile herstellbar sind.

Die Aufgabe wird gelöst mit einer Gussform und einem Herstellungsverfahren gemäß den unabhängigen Ansprüchen.

Eine erfindungsgemäße Gussform besteht aus mehreren Formteilen zum Herstellen von Gussteilen in einer Gießmaschine. Die Formteile wirken währen des Gießvorganges zusammen. Erfindungsgemäß ist wenigstens eines der Formteile zumindest teilweise aus einem Hochleistungsbeton hergestellt. Unter Hochleistungsbeton wird ein Beton mit einer Druckfestigkeit von über 60 N/mm² verstanden. Hochleistungsbeton weist eine hohe Dichte auf und wird üblicherweise bei hohen Beanspruchungen in der Bauindustrie verwendet. Insbesondere im formgebenden Bereich von Gießmaschinen, beispielsweise Spritzgießmaschinen für Kunststoffteile wurden Hochleistungsbetone bisher noch nicht eingesetzt. Sowohl in direktem Kontakt mit dem zu erzeugenden Gussteil als auch zur Unterstützung der formgebenden Kontur der Formteile hat sich die Verwendung von Hochleistungsbeton nunmehr als äußerst vorteilhaft herausgestellt. Hochleistungsbeton weist Eigenschaften auf, welche die Formteile ausreichend widerstandsfähig machen um den hohen Drücken in Gießmaschinen zu widerstehen. Während herkömmlicher Beton bei den vorliegenden Drücken zumindest bei häufigerer Anwendung zerstört werden würde, ist der Hochleistungsbeton nicht nur widerstandsfähig, sondern auch formgenau und auch für hohe Stückzahlen einsetzbar. Es ist daher möglich, dass der Hochleistungsbeton direkt die Form aufweist, welche das spätere Gussteil haben soll. Diese gewünschte Form wird bei den vorherrschenden Drücken und auch bei den entsprechenden Temperaturen in den zulässigen Toleranzen eingehalten, so dass die entsprechenden Gussteile sehr präzise und auch in großen Stückzahlen hergestellt werden können.

Die Herstellung einer Gussform aus Hochleistungsbeton hat enorme wirtschaftliche Vorteile. Während übliche Gussformen aus Stahl gefräst sind, wird das erfindungsgemäße Formteil zumindest annähernd in die gewünschte Form gegossen. Der sehr kostenintensive Stahl wird vollständig oder zumindest weitgehend vermieden. Auch die zeit- und kostenaufwändige Bearbeitung der teuren Stahlblöcke beispielsweise durch mehrfaches Fräsen, Bohren oder gar Erodieren ist nicht mehr in dem Umfang wie bisher erforderlich. Es ist allenfalls eine Feinbearbeitung nötig, welche wesentlich weniger zeitaufwändig und damit weniger kostenintensiv ist.

Gemäß der Erfindung wird der Hochleistungsbeton des Formteiles gefräst und/oder geschliffen, um die gewünschte Negativform für das Gussteil zu erlangen. Dabei wird ein Teil bereits grob in die gewünschte Form gegossen und erfolgt lediglich die Feinbearbeitung mittels Fräsen und/oder Schleifen. Hierdurch wird sowohl die Oberfläche verbessert als auch die genaue Form erhalten, welche bei einer Betonschalung und dem herkömmlichen Giesvorgang für den Betonkörper nicht ohne Weiteres zu erzielen wäre. Durch das Fräsen und/oder Schleifen können auch komplizierte Formen des Formteiles erhalten werden. Beispielsweise auf einer 5-Achsen-Fräsmaschine können Toleranzen bis zu 1/10 mm erreicht werden.

Vorteilhafterweise wird ein Hochleistungsbeton verwendet, welcher faserverstärkt ist. Die in dem Hochleistungsbeton eingemischten Fasern bringen eine zusätzliche Festigkeit um die Formteile noch widerstandsfähiger zu machen. Besonders vorteilhaft ist es hierbei, wenn kleine Stahlfasern verwendet werden um die Oberfläche des Formteiles nicht zu beschädigen, wenn diese gefräst und/oder geschliffen wird.

Ist das Formteil aus einem schwindarmen Hochleistungsbeton hergestellt, so kann es in der Betonschalung bereits sehr genau vorgeformt werden. Dadurch verringert sich der Aufwand für die mechanische Bearbeitung des Formteiles um es in die gewünschte, exakte Form zu bringen.

Um die Festigkeit des Formteiles weiter zu erhöhen ist vorgesehen, dass das Formteil in Längs- und/oder Querrichtung vorgespannt ist. Hierdurch wird das Formteil nochmals deutlich stabiler und ist auch für sehr hohe Drücke in der Gießmaschine einsetzbar.

Als besonders vorteilhaft hat es sich erwiesen, wenn das Formteil aus einem Trägerteil und einem Konturteil besteht. Das Trägerteil kann vorgefertigt sein und muss nicht den sehr hohen Präzisionsanforderungen genügen. Das Konturteil hingegen ist präzise gefertigt um präzise Gussteile erzeugen zu können. Dementsprechend ist das Konturteil aufwändiger herzustellen. Bei einer Teilung des Formteiles in Trägerteil und Konturteil ist die Bearbeitung des Konturteils aufgrund geringerer Größe und Materialeinsatz einfacher durchzuführen.

Sind das Trägerteil und das Konturteil lösbar miteinander verbunden, so wird in vorteilhafter Weise ermöglicht, dass das Konturteil von dem Trägerteil entfernt werden kann, beispielsweise wenn es beschädigt ist oder gegen ein Konturteil mit einer anderen Kontur zur Herstellung anderer Gussteile ausgetauscht werden soll.

Als besonders vorteilhaft hat es sich herausgestellt, wenn das Formteil als Art Hybrid hergestellt wird. Dabei besteht das Formteil zum Teil aus Hochleistungsbeton und zu einem anderen Teil aus Metall. In einer einfachen Ausgestaltung besteht dabei das Trägerteil aus Hochleistungsbeton, während das Konturteil selbst vollständig aus Metall besteht. Es sind aber auch Formteile besonders kostengünstig und exakt herstellbar, welche im Bereich einfacherer Konturen aus dem Hochleistungsbeton hergestellt sind und kompliziertere Konturen wie beispielsweise dünne Rippen aus Metall hergestellt sind. Das Metall kann dabei auf das Betonteil aufgeschraubt oder aufgeklebt sein. Es ist aber auch möglich, dass es beim Giesen der Betonform als ein Einlegeteil mitgegossen wird und die Kontur somit in einzelnen Bereichen aus Beton oder in anderen Bereichen aus Metall zusammengesetzt ist. Das Konturteil und/oder das Einlegeteil sind dabei vorzugsweise aus einem Stahl, insbesondere einem hochwertigen Stahl oder auch aus Aluminium hergestellt. Das hier zu wählende Material ist abhängig von dem Gießverfahren und dem herzustellenden Gussteil und den dabei zu erwartenden Drücken und Temperaturen.

Vorteilhaft ist es, wenn das Formteil, insbesondere das Konturteil eine porenlose Oberfläche aufweist. Das wird insbesondere dann erreicht, wenn ein Hochleistungsbeton verwendet wird, welcher weitgehend porenlos gießbar ist. Damit ist es möglich, dass der Beton direkt den Kontakt zu dem Gussteil bildet, ohne dass sich Poren des Betons oder eines anderen Materials, das beispielsweise für das Konturteil verwendet wurde, in der Oberfläche des Gussteiles wiederfinden würden.

Um eine besonders glatte Oberfläche zu erzielen, ist es vorteilhaft, wenn das Formteil, insbesondere das Konturteil mit einer Oberflächenbeschichtung versehen ist. Derartige Oberflächenbeschichtungen können unter anderem Lacke oder glasharte Glasuren sein, welche beispielsweise zur Versiegelung aufgeschmolzen werden.

Für eine ebenfalls besonders glatte und gleichmäßige Oberfläche ist es vorteilhaft, wenn das Formteil, insbesondere das Konturteil poliert ist. Durch die Politur werden optisch glatte Oberflächen auf dem Gussteil erzeugt, welche außerdem das Entformen der Gussteile vorteilhaft beeinflussen.

Weist das Formteil ein Metalleinlegeteil auf, welches mit dem Hochleistungsbeton des übrigen Formteiles zusammenwirkt, so können kompliziertere Formen für das Gussteil erzielt werden. Die Metalleinlegeteile können außerhalb des Formteils selbst gegossen sein oder in herkömmlicher spanender Weise hergestellt sein. Mit dem Formteil werden sie anschließend entweder mit vergossen oder lösbar oder unlösbar mit dem Formteil verbunden. Insbesondere dünne Rippen oder in Beton schwierig herstellbare andere Formen sind hierdurch mit dem Formteil integrierbar.

Besonders vorteilhaft ist es wenn das Formteil, insbesondere das Trägerteil zusammen mit Funktionselementen wie Halterungsnuten, Führungen und Kanälen gegossen ist. Diese Funktionselemente müssen hierdurch nicht durch Bohren oder Fräsen in das Formteil eingebracht werden. Sie können mit entsprechenden Schalungen und Bauteilen bereits vor dem Gießen des Formteiles positioniert werden und sind anschließend in der gewünschten Lage angeordnet. Funktionselemente können beispielsweise Halterungsnuten sein, mit welchen die Formteile in der Gießmaschine gehalten werden um aufeinander zu und voneinander weg bewegt zu werden. Sie können durch entsprechende Leisten in der Schalung hergestellt werden. Führungen, mit welchen die Formteile zueinander in der Gießmaschine positioniert werden, können durch Hülsen und Bolzen vorgesehen werden. Kanäle, durch welche beispielsweise Trägerteil und Konturteil miteinander verschraubt werden, können ebenso durch entsprechende Funktionselemente vor dem Gießen positioniert werden wie Schläuche, mit welchen Kühlmittel in die Form eingeführt wird. Das Formteil kann in einer wiederverwendbaren Schalung gegossen werden, es kann aber auch vorteilhaft sein, wenn das Formteil in einem Kasten gegossen wird, welcher gleichzeitig als Schalung für den Hochleistungsbeton dient. Auf diese Weise trägt der Kasten zu einer weiteren Festigkeit des Betonteiles bei, es kann hierbei eine entsprechend weniger fester Hochleistungsbeton verwendet werden, was unter Umständen zu Kosteneinsparungen führen kann.

Bei dem erfindungsgemäßen Verfahren zur Herstellung eines Formteiles für eine Gussform einer Gießmaschine wirken mehrere Formteile während des Gießvorganges zusammen. Wenigstens eines der Formteile wird zumindest teilweise aus einem Hochleistungsbeton hergestellt. Der Hochleistungsbeton wird in eine Schalung eingegossen und darin ausgehärtet. Um eine besonders hohe Genauigkeit zu erhalten wird der Hochleistungsbeton anschließend, insbesondere nach Beendigung eines natürlichen Schwindvorganges, gefräst und/oder geschliffen. Hierdurch ist eine sehr exakte Form zu erhalten, die ein Gussteil präzise herstellen lässt und andererseits gewährleistet, dass die beiden Formteile exakt aufeinander passen.

Um besonders hohe Festigkeiten zu erzielen ist es vorteilhaft, wenn der Hochleistungsbeton mit Fasern, insbesondere Stahlfasern vermischt wird und anschließend in die Schalung eingefüllt wird. Die Fasern bewirken einen zusätzlichen Zusammenhalt des Hochleistungsbetons und erhöhen damit die Festigkeit des Formteiles.

Wird das Formteil in Längs- und/oder Querrichtung vorgespannt, so stellt auch dies eine Maßnahme dar um die Festigkeit des Formteiles zu erhöhen.

Besonders vorteilhaft ist es, wenn das Formteil zweiteilig hergestellt wird. Dabei besteht es aus einem Trägerteil und einem Konturteil, wobei das Trägerteil mit einer gröberen Toleranz und einer anderen Betonmischung hergestellt werden kann als das Konturteil. Das Konturteil wird vorteilhafterweise mit einem Hochleistungsbeton hergestellt, welcher sehr widerstandsfähig ist und auch sehr gut bearbeitbar und darüber hinaus eine gute Oberflächenstruktur zu erhalten ist. Das Trägerteil selbst ist insbesondere für die Aufnahme des Konturteiles ausgebildet und übernimmt im Wesentlichen die Führung der Formteile und die Aufnahme der Formteile in der Gießmaschine und unterstützt das Konturteil hinsichtlich der zu erwartenden Kräfte während des Gießvorganges. Das Konturteil kann dabei die gesamte Gussform betreffen oder nur Teile davon. Die übrigen Teile können dann durch das Trägerteil geformt werden, insbesondere wenn es Bereiche in der Gussform gibt, welche exakter geformt sein müssen als andere Bereiche.

Wird das Konturteil spanend oder umgeformt hergestellt, so können die entsprechenden niedrigen Toleranzen einfach erzielt werden. Bei einer spanenden Herstellung kann das Konturteil beispielsweise aus Beton, Aluminium oder Stahl hergestellt sein und mit einem Fräser oder Schleifgerät bearbeitet werden. Wird das Konturteil umgeformt hergestellt, so ist es beispielsweise mittels eines Blechteiles sehr einfach zu erhalten. Dieses entsprechend geformte Blechteil wird in das Trägerteil eingelegt und mit diesem verbunden. Das Trägerteil, welches das umgeformte Konturteil trägt, unterstützt das Konturteil, so dass es widerstandsfähig ist. Das Trägerteil selbst muss dabei nicht so exakt gefertigt sein.

Besonders vorteilhaft ist es, wenn das Formteil, insbesondere das Konturteil eine porenlose Oberfläche aufweist. Dies ist möglich, wenn das Formteil, insbesondere das Konturteil aus einem porenlosen Beton hergestellt wird. Die Bearbeitung des Formteils und der Abguss der Gussform wird hierdurch sehr genau möglich. Eine weitere Bearbeitung der Oberfläche des Formteiles ist dann nicht in jedem Falle notwendig.

Ist die Oberfläche nicht in der gewünschten Genauigkeit oder Struktur, so wird das Formteil, insbesondere das Konturteil mit einer Oberflächenbeschichtung versehen. Die Oberflächenbeschichtung besteht aus einem Lack oder aus einem anderen harten Material oder kann auch eine gewisse Struktur aufweisen, welche in dem Gussteil abgebildet werden soll.

Um eine besonders glatte Oberfläche zu erzielen ist es vorteilhaft, wenn das Formteil, insbesondere das Konturteil poliert wird.

Für eine kostengünstige Herstellung des Formteiles, ohne dass es erforderlich wäre eine aufwändige Nachbearbeitung und Einbau von Funktionselementen durchzuführen, ist es vorteilhaft, wenn das Formteil, insbesondere das Trägerteil, zusammen mit Funktionselementen, wie Halterungsnuten, Führungen und Kanälen gegossen wird. Die entsprechenden Funktionselemente werden dabei in der Schalung für das Formteil so positioniert, wie sie später gewünscht sind. Eine weitere Bearbeitung ist sodann nicht oder kaum erforderlich.

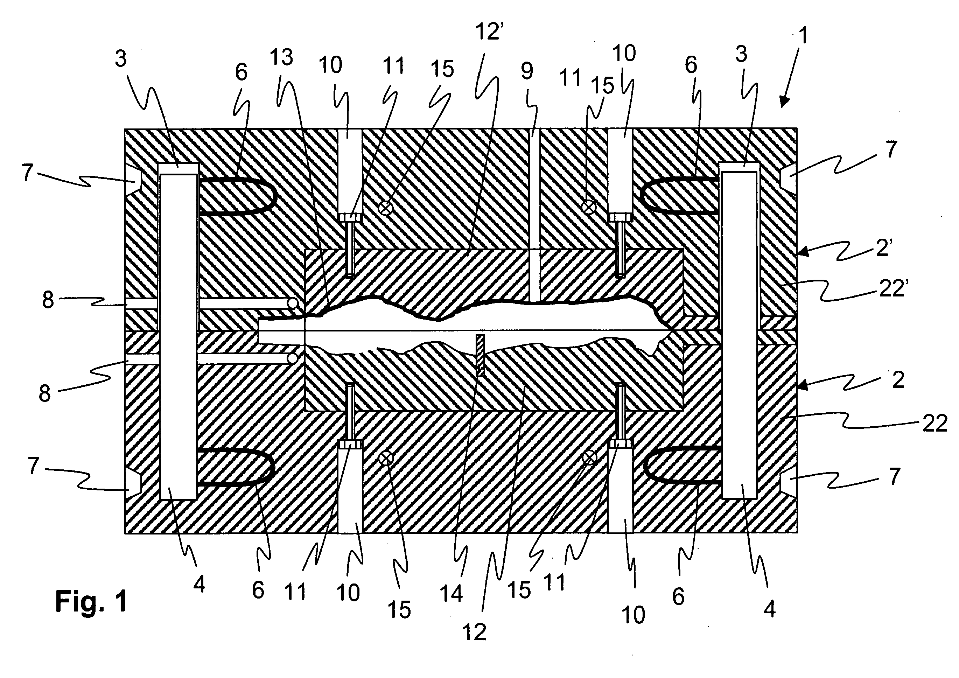

Weitere Vorteile der Erfindung werden anhand den nachfolgenden Ausführungsbeispielen beschrieben. Es zeigt
- **Figur 1**: eine erfindungsgemäße Gussform in Schnittdarstellung.

In Figur 1 ist eine erfindungsgemäße Gussform 1 in einem Querschnitt dargestellt. Die Gussform 1 besteht aus zwei Formteilen 2 und 2', welche miteinander verbunden sind und zusammenwirken. Eine Führung und Zentrierung der Formteile 2, 2' erfolgt mit Hülsen 3, die in dem Formteil 2' angeordnet sind und mit Bolzen 4, welche ihrerseits in dem unteren Formteil 2 befestigt sind. Die Hülsen 3 und Bolzen 4 führen und zentrieren die beiden Formteile 2 und 2' derart, dass ein Hohlraum 5 zwischen den beiden Formteilen 2 und 2' in einer vorher definierten Form zur Herstellung von Gussteilen frei bleibt.

Die Hülsen 3 und Bolzen 4 sind mittels Bügel 6 in den Formteilen 2 und 2' verankert. Die Formteile 2 und 2' sind aus Hochleistungsbeton hergestellt und bilden das wesentliche Element zur Aufnahme der beim Gussvorgang auftretenden Kräfte. Bei der Herstellung der Formteile 2 und 2' werden in der Schalung bereits die Hülsen 3 und Bolzen 4 in der vorbestimmten Position fixiert und mit dem Gießen der Formteile 2 und 2' eingegossen. Die Anordnung der Hülsen 3 und Bolzen 4 wird in der Schalung bereits so festgelegt, dass eine spätere Nachbearbeitung nicht erforderlich ist.

Neben den Hülsen 3 und Bolzen 4 sind auch weitere Aussparungen oder Einbauten in den Formteilen 2, 2' vorgesehen. Gemäß dem dargestellten Ausführungsbeispiel der Erfindung sind am Rand der Formteile 2, 2' Halterungsnuten 7 vorgesehen, mit welchen die Formteile 2, 2' zum Transport in und aus einer Gießmaschine in Transportmitteln befestigt werden können. Außerdem sind in den Formteilen 2, 2' Kanäle, insbesondere Kühlkanäle 8 und Spritzkanäle 9, mit welchen die Kühlung des Werkzeuges und das Zuführen des Gussmaterials zur Herstellung der Gussteile bewerkstelligt werden kann. Die entsprechenden Kanäle 8, 9 können dabei entweder in der Schalung als Kerne vorgesehen sein oder einfach in Form von Schläuchen verlegt sein und beim Gießen der Formteile 2, 2' in der entsprechenden Lage fixiert werden.

In den Formteilen 2, 2' sind weiterhin Öffnungen 10 vorgesehen, durch welche Schrauben 11 ragen. Mit den Schrauben 11 ist in dem vorliegendem Ausführungsbeispiel ein Konturteil 12 und 12' in einem Trägerteil 22, 22' befestigt. Beide bilden zusammen das Formteil 2, 2'. Das Trägerteil 22, 22' nimmt das Formteil 12, 12' auf. In ihm sind die Funktionselemente angeordnet und es übernimmt die wesentlichen Aufgaben zur Festigkeit der Gussform 1. In dem Konturteil 12, 12' ist die Negativform des abzugießenden Gussteiles abgebildet. Der Hohlraum 5 erstreckt sich demnach im Wesentlichen im Bereich der beiden Konturteile 12, 12', aber auch in den Bereich der Trägerteile 22, 22'. Es soll damit angedeutet werden, dass das Gussteil im Bereich von Konturteilen 12, 12' aber auch im Bereich der Trägerteile 22, 22' entstehen kann. Bei anderen, nicht dargestellten Ausführungsbeispielen kann auf das Konturteil 12, 12' vollständig verzichtet werden und der Hohlraum 5 ausschließlich durch Aussparungen im Bereich der Formteile 2, 2' vorgesehen sein. Die Konturteile 12, 12' können aus Metall, beispielsweise Aluminium oder Stahl hergestellt sein. Sie können aber ebenso wie das Trägerteil 22, 22' aus Hochleistungsbeton erstellt sein.

Die Oberflächenbearbeitung des Konturteiles 12, 12', der Trägerteile 22, 22' bzw. der Formteile 2, 2' erfolgt erfindungsgemäß durch Fräsen und/oder Schleifen. Die Oberfläche kann weiter auch poliert sein. Bei Bedarf kann auch eine Oberflächenbeschichtung 13 vorgesehen sein, um eine geforderte Oberflächengüte zu erreichen. Die Oberflächenbeschichtung 13 kann auch dafür eingesetzt werden um bestimmte Strukturen auf dem Gussteil zu erzeugen.

Um an einem Gussteil schmale Nuten erzeugen zu können, ist in dem vorliegenden Ausführungsbeispiel in dem Konturteil 12 ein Metalleinlegeteil 14 in Form einer Leiste befestigt. Dies bietet sich immer dann an, wenn Formen gefordert werden, welche in dem Konturteil 12, 12', dem Trägerteil 22, 22' bzw. dem Formteil 2, 2' aufgrund der Materialwahl oder der vorgesehenen Bearbeitungen, wie Fräsen, Bohren, Schleifen, Erodieren oder Polieren, nicht ohne weiteres hergestellt werden können. Das Metalleinlegeteil 14 wird in das Konturteil 12, oder bei anderen Ausführungen in das Konturteil 12' oder allgemein in die Formteile 2, 2' eingegossen oder eingeklebt oder anderweitig fixiert.

Während das linke Ende des Hohlraumes 5 in den Trägerteilen 22, 22' endet, ist es am rechten Ende vollständig in das Konturteil 12, 12' integriert. An den Kontaktstellen der beiden Formteile 2, 2' sind links und rechts der Gussform 1 unterschiedliche Ausführungsvarianten dargestellt. Während am linken Ende die beiden Trägerteile 22, 22' aneinander grenzen und dort die Gussform 1 abdichten, sind am rechten Ende der Gussform 1 die Konturteile 12, 12' verlängert und bilden dort entsprechende Dichtflächen aus. Üblicherweise wird eine Konstruktion gewählt, welche das Abdichten der Gussform 1 mit dem geringsten Aufwand ermöglicht.

Der Spritzkanal 9 beginnt in dem Trägerteil 22' und ist in dem Konturteil 12' fortgesetzt. Er ist hier nur symbolisch dargestellt und wird selbstverständlich an der Stelle oder den Stellen gewählt, welche am geeignetsten zur Herstellung des Gussteiles sind.

Um die Stabilität des Formteiles 2, 2', des Trägerteiles 22, 22' oder auch des Konturteiles 12, 12' zu erhöhen, ist der Hochleistungsbeton, aus welchem die Teile gegossen sind, mit nicht dargestellten Fasern oder mit Vorspannelementen 15 verstärkt. Hierdurch wird die Gussform 1 auch bei Gussverfahren einsetzbar, bei welchen sehr hohe Drücke zu erwarten sind. Die Vorspannelemente 15 können sowohl in Querrichtung der Gussform 1 als auch in Längsrichtung verlaufen, je nachdem wie die zu erwartenden Kräfte sind, welche aufgenommen werden müssen.

Die vorliegende Erfindung ist nicht auf das dargestellte Ausführungsbeispiel beschränkt. Beispielsweise sind Änderungen in Bezug auf das Konturteil 12, 12' möglich. Eine erfindungsgemäße Gussform 1 kann auch auf das separate Konturteil 12, 12' vollständig verzichten, wenn die entsprechende Kontur in die Formteile 2, 2' eingearbeitet ist. Außerdem sind weitere Einbauteile in den aus Hochleistungsbeton gegossenen Formteilen 2, 2', Trägerteilen 22. 22' oder Konturteilen 12, 12' möglich. Durch das Vorformen beim Gießen der Hochleistungsbetonteile entsteht der große Vorteil der Erfindung, wodurch viele mechanische Nachbearbeitungsschritte vermieden werden können, weil die entsprechenden Einbauteile oder Öffnungen bereits in der Schalung für die zu gießende Form vorgesehen sein können. Die Herstellung einer erfindungsgemäßen Gussform 1 kann hierdurch wesentlich schneller und kostengünstiger durchgeführt werden.

## Patentansprüche

1. Gussform mit mehreren Formteilen (2, 2') zum Herstellen von Gussteilen in einer Gießmaschine, wobei die Formteile (2, 2') während des Gießvorganges zusammenwirken und wenigstens eines der Formteile (2, 2') zumindest teilweise aus einem Hochleistungsbeton hergestellt ist, **dadurch gekennzeichnet, dass** das Formteil (2, 2') grob gegossen und der Hochleistungsbeton des Formteiles (2, 2') zur Feinbearbeitung gefräst und/oder geschliffen ist.

2. Gussform gemäß dem vorherigen Anspruch, **dadurch gekennzeichnet, dass** der Hochleistungsbeton Fasern enthält.

3. Gussform gemäß einem der vorherigen Ansprüche, **dadurch gekennzeichnet, dass** der Hochleistungsbeton schwindarm ist.

4. Gussform gemäß einem der vorherigen Ansprüche, **dadurch gekennzeichnet, dass** das Formteil (2, 2') in Längs- und/oder Querrichtung vorgespannt ist.

5. Gussform gemäß einem der vorherigen Ansprüche, **dadurch gekennzeichnet, dass** das Formteil (2, 2') aus einem Trägerteil (22, 22') und einem Konturteil (12, 12') besteht.

6. Gussform gemäß einem der vorherigen Ansprüche, **dadurch gekennzeichnet, dass** das Trägerteil (22, 22') und das Konturteil (12, 12') lösbar miteinander verbunden sind.

7. Gussform gemäß einem der vorherigen Ansprüche, **dadurch gekennzeichnet, dass** das Formteil (2, 2'), insbesondere das Konturteil (12, 12') zumindest teilweise aus Metall besteht.

8. Gussform gemäß einem der vorherigen Ansprüche, **dadurch gekennzeichnet, dass** das Konturteil (12, 12') vollständig aus einem hochwertigen Stahl hergestellt ist.

9. Gussform gemäß einem der vorherigen Ansprüche, **dadurch gekennzeichnet, dass** das Konturteil (12, 12') spanend oder umgeformt hergestellt ist.

10. Gussform gemäß einem der vorherigen Ansprüche, **dadurch gekennzeichnet, dass** das Formteil (2, 2'), insbesondere das Konturteil (12, 12') eine porenlose Oberfläche aufweist.

11. Gussform gemäß einem der vorherigen Ansprüche, **dadurch gekennzeichnet, dass** das Formteil (2, 2'), insbesondere das Konturteil (12, 12') mit einer Oberflächenbeschichtung (13) versehen ist.

12. Gussform gemäß einem der vorherigen Ansprüche, **dadurch gekennzeichnet, dass** das Formteil (2, 2'), insbesondere das Konturteil (12, 12') poliert ist.

13. Gussform gemäß einem der vorherigen Ansprüche, **dadurch gekennzeichnet, dass** das Formteil (2, 2') Metalleinlegeteile (14) aufweist.

14. Gussform gemäß einem der vorherigen Ansprüche, **dadurch gekennzeichnet, dass** das Formteil (2, 2'), insbesondere das Trägerteil (22, 22') zusammen mit Funktionselementen wie Halterungsnuten (7), Führungen (3, 4) und Kanälen (8) zur Kühlung der Form (1) oder Öffnungen (10) zum Befestigen des Konturteiles (12, 12') gegossen ist.

15. Gussform gemäß einem der vorherigen Ansprüche, **dadurch gekennzeichnet, dass** das Formteil (2, 2') in einem Kasten angeordnet ist.

16. Verfahren zur Herstellung eines Formteiles (2, 2') für eine Gussform einer Gießmaschine, wobei mehrere Formteile (2, 2') während des Gießvorganges zusammenwirken und wenigstens eines der Formteile (2, 2') zumindest teilweise aus einem Hochleistungsbeton hergestellt wird, **dadurch gekennzeichnet, dass** das Formteil (2, 2') zuerst grob in die gewünschte Form gegossen wird und der Hochleistungsbeton des Formteiles (2, 2') anschließend, insbesondere nach Beendigung eines natürlichen Schwindvorgangs, gefräst und/oder geschliffen wird.

17. Verfahren gemäß einem der vorherigen Ansprüche, **dadurch gekennzeichnet, dass** der Hochleistungsbeton mit Fasern vermischt wird.

18. Verfahren gemäß einem der vorherigen Ansprüche, **dadurch gekennzeichnet, dass** das Formteil (2, 2') in Längs- und/oder Querrichtung vorgespannt wird.

19. Verfahren gemäß einem der vorherigen Ansprüche, **dadurch gekennzeichnet, dass** das Formteil (2, 2') aus einem Trägerteil (22, 22') und einem Konturteil (12, 12') hergestellt wird.

20. Verfahren gemäß einem der vorherigen Ansprüche, **dadurch gekennzeichnet, dass** das Trägerteil (22, 22') und das Konturteil (12, 12') lösbar miteinander verbunden werden.

21. Verfahren gemäß einem der vorherigen Ansprüche, **dadurch gekennzeichnet, dass** das Konturteil (12, 12') spanend oder umgeformt hergestellt wird.

22. Verfahren gemäß einem der vorherigen Ansprüche, **dadurch gekennzeichnet, dass** das Formteil (2, 2'), insbesondere das Konturteil (12, 12') mit einer porenlosen Oberfläche hergestellt wird.

23. Verfahren gemäß einem der vorherigen Ansprüche, **dadurch gekennzeichnet, dass** das Formteil (2, 2'), insbesondere das Konturteil (12, 12') mit einer Oberflächenbeschichtung (13) versehen wird.

24. Verfahren gemäß einem der vorherigen Ansprüche, **dadurch gekennzeichnet, dass** das Formteil (2, 2'), insbesondere das Konturteil (12, 12') poliert wird.

25. Verfahren gemäß einem der vorherigen Ansprüche, **dadurch gekennzeichnet, dass** das Formteil (2, 2'), insbesondere das Trägerteil (22, 22') zusammen mit Funktionselementen wie Halterungsnuten (7), Führungen (3, 4) und Kanälen (8) zur Kühlung der Form (1) oder Öffnungen (10) zum Befestigen des Konturteiles (12, 12') gegossen wird.

## Claims

1. A casting mold having a plurality of mold parts (2, 2') for producing castings in a casting machine, the mold parts (2, 2') interacting during the casting process and at least one of the mold parts (2, 2') being produced at least partially of a high-performance concrete, **characterized in that** the mold part (2, 2') is coarsely cast and the high-performance concrete of the mold part (2, 2') is milled and/or ground for fine machining.

2. A casting mold according to the preceding claims, **characterized in that** the high-performance concrete comprises fibers.

3. The casting mold according to one of the preceding claims, **characterized in that** the high-performance concrete is low-shrinkage.

4. The casting mold according to one of the preceding claims, **characterized in that** the mold part (2, 2') is pre-tensioned in the longitudinal and/or transverse direction.

5. The casting mold according to one of the preceding claims, **characterized in that** the mold part (2, 2') is made of a carrier part (22, 22') and a contour part (12, 12').

6. The casting mold according to one of the preceding claims, **characterized in that** the carrier part (22, 22') and the contour part (12, 12,') are releasably connected to each other.

7. The casting mold according to one of the preceding claims, **characterized in that** the mold part (2, 2'), particularly the contour part (12, 12'), is made at least partially of metal.

8. The casting mold according to one of the preceding claims, **characterized in that** the contour part (12, 12') is produced entirely of a high-quality steel.

9. The casting mold according to one of the preceding claims, **characterized in that** the contour part (12, 12') is produced by machining or forming.

10. The casting mold according to one of the preceding claims, **characterized in that** the mold part (2, 2'), particularly the contour part (12, 12'), has a non-porous surface.

11. The casting mold according to one of the preceding claims, **characterized in that** the mold part (2, 2'), particularly the contour part (12, 12'), has a surface coating (13).

12. The casting mold according to one of the preceding claims, **characterized in that** the mold part (2, 2'), particularly the contour part (12, 12'), is polished.

13. The casting mold according to one of the preceding claims, **characterized in that** the mold part (2, 2') comprises metal inserts (14).

14. The casting mold according to one of the preceding claims, **characterized in that** the mold part (2, 2'), particularly the carrier part (22, 22') is cast together with functional elements such as mounting grooves (7), guides (3, 4), and channels (8) for cooling the mold (1) or openings (10) for attaching the contour part (12, 12').

15. The casting mold according to one of the preceding claims, **characterized in that** the mold part (2, 2') is disposed in a case.

16. A method for producing a mold part (2, 2') for a casting mold of a casting machine, a plurality of mold parts (2, 2') interacting during the casting process and at least one of the mold parts (2, 2') being made at least partially of a high-performance concrete, **characterized in that** the mold part (2, 2') is first coarsely cast in the desired form, and the high-performance concrete of the mold part (2, 2') is subsequently, particularly after the end of a natural shrinkage process, milled and/or ground.

17. The method according to the preceding claim, **characterized in that** the high-performance concrete is mixed with fibers.

18. The method according to one of the preceding claims, **characterized in that** the mold part (2, 2') is pre-tensioned in the longitudinal and/or transverse direction.

19. The method according to one of the preceding claims, **characterized in that** the mold part (2, 2') is made of a carrier part (22, 22') and a contour part (12, 12').

20. The method according to one of the preceding claims, **characterized in that** the carrier part (22, 22') and the contour part (12, 12') are releasably connected to each other.

21. The method according to one of the preceding claims, **characterized in that** the contour part (12, 12') is produced by machining or forming.

22. The method according to one of the preceding claims, **characterized in that** the mold part (2, 2'), particularly the contour part (12, 12'), is produced having a non-porous surface.

23. The method according to one of the preceding claims, **characterized in that** the mold part (2, 2'), particularly the contour part (12, 12'), has a surface coating (13).

24. The method according to one of the preceding claims, **characterized in that** the mold part (2, 2'), particularly the contour part (12, 12'), is polished.

25. The method according to one of the preceding claims, **characterized in that** the mold part (2, 2'), particularly the carrier part (22, 22') is cast together with functional elements such as mounting grooves (7), guides (3, 4), and channels (8) for cooling the mold (1) or openings (10) for attaching the contour part (12, 12').

## Revendications

1. Moule de fonte avec plusieurs pièces de moule (2, 2') pour la fabrication de pièces moulées dans une machine de coulée, sachant que les pièces de moule (2, 2') concourent durant la procédure de coulée et au moins l'une des pièces de moule (2, 2') est réalisée au moins partiellement en béton à hautes performances, **caractérisé en ce que** la pièce de moule (2, 2') est coulée grossièrement et le béton à hautes performances de la pièce de moule (2, 2') est fraisé et/ou meulé pour le finissage.

2. Moule de fonte selon la revendication précédente, **caractérisé en ce que** le béton à hautes performances contient des fibres.

3. Moule de fonte selon l'une quelconque des revendications précédentes, **caractérisé en ce que** le béton à hautes performances est à faible retrait.

4. Moule de fonte selon l'une quelconque des revendications précédentes, **caractérisé en ce que** la pièce de moule (2, 2') est précontrainte dans le sens longitudinal et/ou transversal.

5. Moule de fonte selon l'une quelconque des revendications précédentes, **caractérisé en ce que** la pièce de moule (2, 2') se compose d'une pièce support (22, 22') et d'une pièce de contour (12, 12').

6. Moule de fonte selon l'une quelconque des revendications précédentes, **caractérisé en ce que** la pièce support (22, 22') et la pièce de contour (12,12') sont reliées l'une à l'autre de manière dissociable.

7. Moule de fonte selon l'une quelconque des revendications précédentes, **caractérisé en ce que** la pièce de moule (2, 2'), particulièrement la pièce de contour (12, 12'), se compose au moins partiellement de métal.

8. Moule de fonte selon l'une quelconque des revendications précédentes, **caractérisé en ce que** la pièce de contour (12, 12') est intégralement réalisée en métal de haute qualité.

9. Moule de fonte selon l'une quelconque des revendications précédentes, **caractérisé en ce que** la pièce de contour (12, 12') est réalisée par usinage ou par déformation.

10. Moule de fonte selon l'une quelconque des revendications précédentes, **caractérisé en ce que** la pièce de moule (2, 2'), particulièrement la pièce de contour (12, 12'), présente une surface exempte de pores.

11. Moule de fonte selon l'une quelconque des revendications précédentes, **caractérisé en ce que** la pièce de moule (2, 2'), particulièrement la pièce de contour (12, 12'), est dotée d'un revêtement de surface (13).

12. Moule de fonte selon l'une quelconque des revendications précédentes, **caractérisé en ce que** la pièce de moule (2, 2'), particulièrement la pièce de contour (12, 12'), est polie.

13. Moule de fonte selon l'une quelconque des revendications précédentes, **caractérisé en ce que** la pièce de moule (2, 2') comporte des pièces d'insertion métalliques (14).

14. Moule de fonte selon l'une quelconque des revendications précédentes, **caractérisé en ce que** la pièce de moule (2, 2'), particulièrement la pièce support (22, 22'), est coulée conjointement à des éléments fonctionnels tels que des rainures d'arrêt (7), des guidages (3, 4) et des canaux (8) pour refroidir le moule de fonte (1) ou des ouvertures (10) pour fixer la pièce de contour (12, 12').

15. Moule de fonte selon l'une quelconque des revendications précédentes, **caractérisé en ce que** la pièce de moule (2, 2') est disposée dans un caisson.

16. Procédé pour fabriquer une pièce de moule (2, 2') pour un moule de fonte d'une machine de coulée, dans lequel plusieurs pièces de moule (2, 2') concourent durant la procédure de coulée et au moins l'une des pièces de moule (2, 2') est réalisée au moins partiellement en un béton à hautes performances, **caractérisé en ce que** la pièce de moule (2, 2') est d'abord coulée grossièrement dans le moule souhaité et le béton à hautes performances de la pièce de moule (2, 2') est ensuite fraisé et/ou meulé, particulièrement après achèvement d'une procédure de retrait naturel.

17. Procédé selon la revendication précédente, **caractérisé en ce que** le béton à hautes performances est mélangé avec des fibres.

18. Procédé selon l'une quelconque des revendications précédentes, **caractérisé en ce que** la pièce de moule (2, 2') est précontrainte dans le sens longitudinal et/ou transversal.

19. Procédé selon l'une quelconque des revendications précédentes, **caractérisé en ce que** la pièce de moule (2, 2') est réalisée à partir d'une pièce support (22, 22') et d'une pièce de contour (12, 12').

20. Procédé selon l'une quelconque des revendications précédentes, **caractérisé en ce que** la pièce support (22, 22') et la pièce de contour (12') sont reliées l'une à l'autre de manière dissociable.

21. Procédé selon l'une quelconque des revendications précédentes, **caractérisé en ce que** la pièce de contour (12, 12') est réalisée par usinage ou par déformation.

22. Procédé selon l'une quelconque des revendications précédentes, **caractérisé en ce que** la pièce de moule (2, 2'), particulièrement la pièce de contour (12, 12'), est réalisé avec une surface exempte de pores.

23. Procédé selon l'une quelconque des revendications précédentes, **caractérisé en ce que** la pièce de moule (2, 2'), particulièrement la pièce de contour (12, 12'), est dotée d'un revêtement de surface (13).

24. Procédé selon l'une quelconque des revendications précédentes, **caractérisé en ce que** la pièce de moule (2, 2'), particulièrement la pièce de contour (12, 12'), est polie.

25. Procédé selon l'une quelconque des revendications précédentes, **caractérisé en ce que** la pièce de moule (2, 2'), particulièrement la pièce support (22, 22'), est coulée conjointement à des éléments fonctionnels tels que des rainures d'arrêt (7), des guidages (3, 4) et des canaux (8) pour refroidir le moule de fonte (1) ou des ouvertures (10) pour fixer la pièce de contour (12, 12').
